(19) Europäisches Patentamt
European Patent Office
Office européen des brevets

(11) **EP 4 421 606 A1**

(12) **EUROPEAN PATENT APPLICATION**

(43) Date of publication:
**28.08.2024  Bulletin 2024/35**

(51) International Patent Classification (IPC):
***G06F 3/04883*** (2022.01)    ***G06F 3/0484*** (2022.01)
***G06F 9/451*** (2018.01)

(21) Application number: **23218870.6**

(22) Date of filing: **20.12.2023**

(52) Cooperative Patent Classification (CPC):
**G06F 3/04883; G06F 3/0484; G06F 9/451**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.02.2023  CN 202310166226**

(71) Applicant: **Nio Technology (Anhui) Co., Ltd
Hefei City, Anhui 230601 (CN)**

(72) Inventor: **LEI, Jinliang
Hefei City, Anhui, 230601 (CN)**

(74) Representative: **Vossius & Partner
Patentanwälte Rechtsanwälte mbB
Siebertstrasse 3
81675 München (DE)**

(54)  **METHOD FOR IMPLEMENTING TOUCH INTERACTION, AND TOUCH INTERACTION DEVICE**

(57)    The disclosure relates to computer interaction technologies, and specifically to a method for implementing touch interaction, and a touch interaction device for implementing this method. According to an aspect of the disclosure, the method for implementing touch interaction includes: presenting a first view and a second view on a touch display screen by a first application and a second application, respectively, where the second view is an embedded view of the first view; in response to a touch event occurring within a region in the first view that corresponds to the second view, determining, by the first application, the type of the touch event and proportional coordinates of the touch event within the second view; sending, by the first application, the type and the proportional coordinates to the second application; and generating, by the second application and based on the type and the proportional coordinates, an operation instruction to respond to the touch event.

FIG. 3

EP 4 421 606 A1

**Description**

Technical Field

The disclosure relates to computer interaction technologies, and specifically to a method for implementing touch interaction, and a touch interaction device for implementing this method.

Background Art

In a desktop framework architecture of a vehicle display system, a multi-application-view embedding solution is usually required, such as to embed an Android view into a **Unity** view. However, an embedded view is only for the purpose of display, but is not able to respond to events based on other views (e.g., touch actions), making it not possible to provide complete functions of a desktop framework.

Summary

An objective of the disclosure is to provide a method for implementing touch interaction, and a touch interaction device for implementing this method, which can provide complete functions, including display and interaction, within a multi-application-view embedded architecture.

According to an aspect of the disclosure, a method for implementing touch interaction is provided, which includes:

presenting a first view and a second view on a touch display screen by a first application and a second application, respectively, where the second view is an embedded view of the first view;

in response to a touch event occurring within a region in the first view that corresponds to the second view, determining, by the first application, the type of the touch event and proportional coordinates of the touch event within the second view;

sending, by the first application, the type and the proportional coordinates to the second application; and

generating, by the second application and based on the type and the proportional coordinates, an operation instruction to respond to the touch event.

Optionally, in the above method, the first view and the second view are respectively a Unity view and an Android view.

Further, in the above method, the type of the touch event includes an action-down event, an action-move event, and an action-up event.

Further, in the above method, the second view is embedded into the first view by:

creating, within the first view, a view control for displaying the second view, where the creation includes setting a start position and plane dimensions of the view control within the first view.

Still further, in the above method, the first application determines the proportional coordinates by:

determining first coordinates of the touch event within a first coordinate system corresponding to the first view;

transforming the first coordinates into second coordinates within a second coordinate system corresponding to the view control; and

determining the proportional coordinates based on the second coordinates and the plane dimensions of the view control.

Optionally, in the above method, the first application sends the type and the proportional coordinates to the second application by means of an interprocess communication mechanism.

Further, in the above method, the second application generates the operation instruction by:

determining pixel coordinates of the touch event on the touch display screen based on the plane dimensions of the second view and the proportional coordinates;

generating, based on the type and the pixel coordinates, a native event adapted to be responded to by the second view; and

sending the native event to the second view.

According to another aspect of the disclosure, a touch interaction device is provided, which includes:

a touch display screen; and

a control unit, including:

a memory having a first application and a second application stored thereon; and
at least one processor,

where the first application and the second application are run on the at least one processor to:

present a first view and a second view on the touch display screen by the first application and the second application, respectively, where the second view is an embedded view of the first view;
in response to a touch event occurring within a region in the first view that corresponds to the second view, determine, by the first application, the type of the touch event and proportional coordinates of the touch event within the second view;
send, by the first application, the type and the proportional coordinates to the second application; and
generate, by the second application and based on the type and the proportional coordinates, an operation instruction to respond to the touch event.

Optionally, in the above touch interaction device, the first view and the second view are respectively a Unity view and an Android view.

Further, in the above touch interaction device, the type of the touch event includes an action-down event, an action-move event, and an action-up event.

Further, in the above touch interaction device, the second view is embedded into the first view by:
creating, within the first view, a view control for displaying the second view, where the creation includes setting a start position and plane dimensions of the view control within the first view.

Further, in the above touch interaction device, the first application determines the proportional coordinates by:

determining first coordinates of the touch event within a first coordinate system corresponding to the first view;
transforming the first coordinates into second coordinates within a second coordinate system corresponding to the view control; and
determining the proportional coordinates based on the second coordinates and the plane dimensions of the view control.

Optionally, in the above touch interaction device, the first application sends the type and the proportional coordinates to the second application by means of an interprocess communication mechanism.

Further, in the above touch interaction device, the second application generates the operation instruction by:

determining pixel coordinates of the touch event on the touch display screen based on the plane dimensions of the second view and the proportional coordinates;
generating, based on the type and the pixel coordinates, a native event adapted to be responded to by the second view; and
sending the native event to the second view.

In addition to the above one or more features, the above touch interaction device may be a vehicle central console screen or a smart home central console screen.

In some embodiments of the disclosure, for the multi-application-view embedded architecture, the first application determines a type and proportional coordinates, in a second view framework, of a touch event in a first view framework, and then sends the type and the proportional coordinates to the second application, such that the second application can respond to the touch event according to the second view framework. The above method has high universality, and can be applied to various embedded view architectures. In addition, these embodiments can be implemented purely in software without modifying hardware configurations or structures.

Brief Description of the Drawings

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:

FIG. 1 is a schematic diagram of an architecture of an automotive electronic system;
FIG. 2 is a schematic block diagram of a vehicle central console screen;

FIG. 3 is a flowchart of a method for implementing touch interaction according to some embodiments of the disclosure;

FIG. 4 is a flowchart of a method for determining proportional coordinates according to some other embodiments of the disclosure; and

FIG. 5 is a flowchart of a method for generating an operation instruction according to some other embodiments of the disclosure.

Detailed Description of Embodiments

The disclosure is described below more comprehensively with reference to the accompanying drawings in which schematic embodiments of the disclosure are shown. However, the disclosure may be implemented in different forms, and should not be construed as being limited to the embodiments provided herein. The embodiments provided above are intended to make the disclosure of this specification comprehensive and complete, to more comprehensively convey the scope of protection of the disclosure to those skilled in the art.

In this specification, the terms such as "include" and "comprise" indicate that in addition to the units and steps that are directly and explicitly described in the specification and claims, other units and steps that are not directly or explicitly described are not excluded in the technical solutions of the disclosure.

Unless otherwise specified, the terms such as "first" and "second" are not used to indicate sequences of the units in terms of time, space, size, etc., and are only used to distinguish between the units.

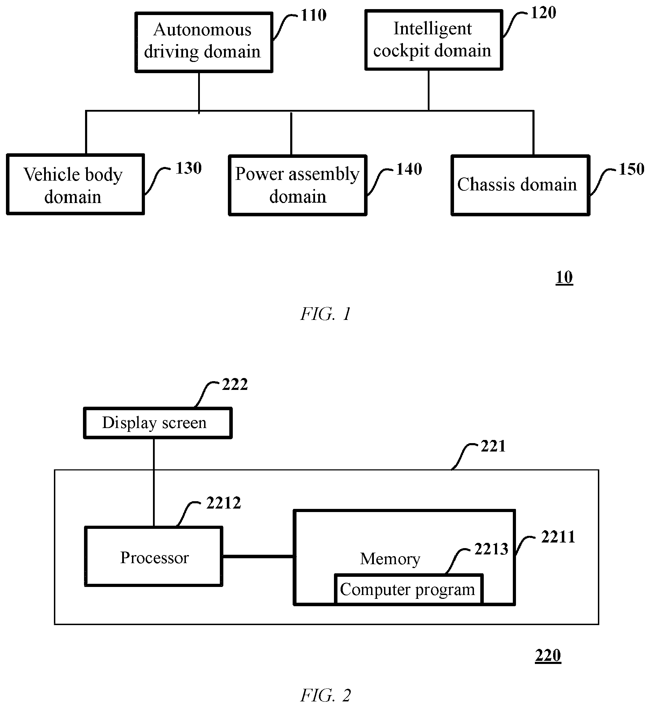

An automotive electronic system may usually divide functional domains in various manners. FIG. 1 is a schematic diagram of an architecture of an automotive electronic system, and shows an exemplary manner of dividing functional blocks. As shown in FIG. **1,** the automotive electronic system **10** includes an autonomous driving domain **110,** an intelligent cockpit domain **120,** a vehicle body domain **130,** a power assembly domain **140,** and a chassis domain **150.** Exemplarily, these functional domains communicate with each other via a bus (for example, Ethernet). It should be noted that division into the above functional domains is merely exemplary, and other manners are also feasible. For example, the vehicle body domain may be integrated with the intelligent cockpit domain.

The autonomous driving domain **110** provides a capability of data processing and computing, including data processing operations on devices such as a millimeter wave radar, a camera, a laser radar, a **GPS,** an inertial navigator, and a capability of making judgments required for autonomous driving. Further, the autonomous driving domain provides security protection of underlying core data and network connection data when a vehicle is in an autonomous driving state.

The intelligent cockpit domain **120** is configured to perform functions of an automotive cockpit electronic system, which may be, for example, an integrated system or a vehicle central console screen that integrates a function of instrument information and multimedia entertainment information display and a function of human-machine interaction.

The vehicle body domain **130** is configured to perform overall control over functions of a vehicle body, and may be, for example, a conventional body control module **(BCM);** or on this basis, further integrate functions such as a passive entry passive start **(PEPS)** system, ripple anti-pinch, and an air conditioning control system.

The power domain **140** is configured to implement optimization and control of an automotive power assembly. The chassis domain **150** is configured to perform vehicle driving control, and includes, for example, an electric power steering **(EPS)** system, an electronic stability control **(ESC)** system, an electric brake booster, an airbag control system, an air suspension, a vehicle speed sensor, etc.

FIG. **2** is a schematic block diagram of a vehicle central console screen. The vehicle central console screen **220** shown in FIG. 2 includes a control unit **221** and a touch display screen **222.** With continued reference to FIG. **2,** the control unit **221** includes a memory **2211,** one or more processors **2212** (e.g., microcontrollers), and a computer program **2213** stored in the memory **2211** and runnable on the processor **2212.** Various functions of the automotive cockpit electronic system are implemented by running the computer program **2213** on the processor **2212.**

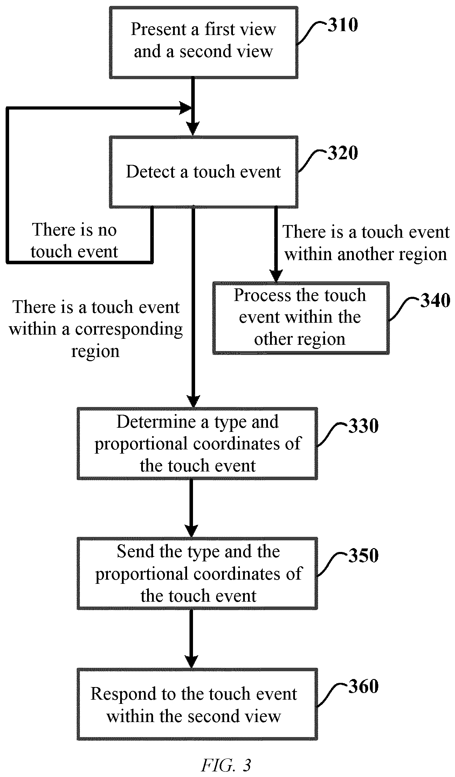

FIG. **3** is a flowchart of a method for implementing touch interaction according to some embodiments of the disclosure. The vehicle central console screen shown in FIG. **2** is used as an exemplary apparatus to describe the steps of the method shown in FIG. **3** below. However, upon reading the content described below, it should be understood that the embodiment shown in FIG. **3** is not limited to being applied to the vehicle central console screen shown in FIG. **2,** but it can also be applied to other types of touch interaction devices, such as a smart home central console screen.

Exemplarily, the computer program **2213** includes a first application **2213A** and a second application **2213B.** The first application **2213A** and the second application **2213B** can be run on the processor **2212** to implement the steps included in the method shown in FIG. **3.** Specifically, the method shown in FIG. **3** includes the steps as follows.

Step 310: Presentation of a first view and a second view

In step **310,** the first application **2213A** and the second application **2213B** respectively present the first view **V1** and the second view **V2** on the touch display screen **222.** In other words, the display of the first view **V1** and the second view **V2** on the touch display screen is implemented by the first application **2213A** and the second application **2213B,** respectively. In some embodiments, the first view **V1** and the second view **V2** may be respectively a **Unity** view and an Android view.

In addition, exemplarily, it is assumed that the second view **V2** is an embedded view of the first view **V1.** The embedded view described herein may be understood that, from the perspective of a user, the second view **V2** is considered as a part of the first view **V1,** and operations can be performed within a region **VC** of the first view **V1** that corresponds to the second view **V2** and within another region of the first view **V1** in such a way that there is no difference to the user.

In some embodiments, the second view **V2** can be embedded into the first view **V1** by creating, within the first view **V1,** a view control **VC** for displaying the second view **V2.** The creation includes setting a start position and plane dimensions of the view control **VC** within the first view **V1** (with a rectangular control as an example, the start position and the plane dimensions are respectively a position of one of vertexes of a rectangle, and a length and a width of the rectangle). With the first view **V1** and the second view **V2** as the **Unity** view and the Android view, respectively, the creation process can be completed by creating, within a **Unity** project of the first application, a **Unity** view control for displaying the Android view, and setting configuration parameters such as the start position and the plane dimensions.

Step 320: Detection of a touch event

After step **310** is performed, the method procedure shown in FIG. **3** proceeds to step **320.** In this step, the first application **2213A** determines whether the touch event occurs within the region **VC** in the first view **V1** that corresponds to the second view **V2.** If the touch event occurs within the corresponding region **VC,** the method procedure proceeds to step **330.** If the touch event occurs within a region, other than the corresponding region **VC,** in the first view **V1,** the method procedure proceeds to step **340.** If no touch event is detected, the detection continues. Exemplarily, examples of a type of the touch event include, but are not limited to, an action-down event (where a pressure is applied to a surface of the touch display screen), an action-move event (where the position of the surface of the touch display screen to which the pressure is applied continues to change), and an action-up event (where the pressure applied to the surface of the touch display screen is released), etc.

Step 330: Determination of the type and proportional coordinates of the touch event

In step **330,** the first application **2213A** determines, in response to the touch event occurring within the region **VC** in the first view **V1** that corresponds to the second view **V2,** the type of the touch event and the proportional coordinates of the touch event within the second view. In some embodiments, a correspondence or a mapping relationship between a type of a touch event within the first view **V1** and a type of a touch event within the second view **V2** can be established in advance, such that the first application **2213A** can determine the corresponding type of the touch event within the second view **V2** based on the type of the touch event that is detected in step **320.** With the first view **V1** and the second view **V2** as the **Unity** view and the Android view, respectively, there is a correspondence between the touch event in the Unity view and the touch event in the Android view, as shown in Table 1 below:

Table **1**

| **Unity** view | Android view |
|---|---|
| Action-down event received by **IPointerUpHandler** interface | **ACTION_DOWN** event in **MotionEvent** |
| Touch action-up event received by **IPointerUpHandler** interface | **ACTION_DOWN** event in **MotionEvent** |
| Swipe event received by **IMoveHandler** interface | **ACTION_MOVE** event in **MotionEvent** |

The first view **V1** often has a different form and dimension from the second view **V2.** For example, the first view may be a three-dimensional view, while the second view may be a two-dimensional view. Additionally, the first view occupies a larger region on the touch display screen than the second view. If the second application **2213B** describes the position where the touch event occurs by using a coordinate system **S1** corresponding to the first view **V1,** i.e., processes the touch event with coordinate values of the coordinate system **S1** as parameter values, an incorrect response operation will be generally caused.

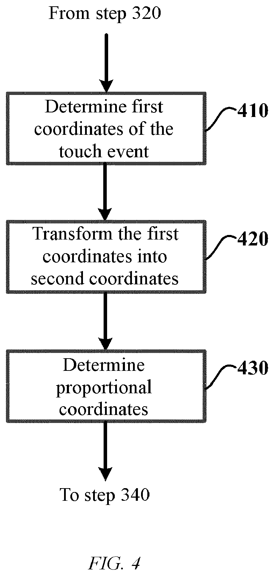

In the disclosure, such errors are avoided by using the proportional coordinates. FIG. **4** is a flowchart of a method for determining proportional coordinates according to some other embodiments of the disclosure, where the first view **V1** and the second view **V2** are still respectively used as the **Unity** view and the Android view in the method described. Referring to FIG. **4,** the method shown includes the following steps performed by the first application **2213A.**

In step **410,** the first application **2213A** determines first coordinates or event coordinates of a touch event within a first coordinate system **S1** corresponding to the first view **V1.** Since the first view is a three-dimensional view, the first coordinate system **S1** is a spatial coordinate system, and correspondingly, the first coordinates can be denoted by **P1** $(x_1, y_1, z_1)$ .

In step **420,** the first coordinates **P1** $(x_1, y_1, z_1)$ are transformed into second coordinates or local coordinates within a second coordinate system **S2** corresponding to a view control **VC.** As the view control is a planar region, the second coordinate system **S2** is a planar coordinate system, and correspondingly, the second coordinates can be denoted by **P2** $(x_2, y_2)$ . Exemplarily, a **ScreenPointToLocalPointInRectangle** function of a **RectTransformUtility** class may be used to transform the first coordinates into the second coordinates.

In step **430,** proportional coordinates **P3** $(x_3, y_3)$ are determined based on plane dimensions of the view control **VC** and the second coordinates **P2** $(x_2, y_2)$ .Exemplarily, assuming that a ratio of the length to width of the view control is **a : b,** the proportional coordinates **P3** $(x_3, y_3)$ may be determined according to the following formula:

$$x_3 = \left[\frac{x_2}{a}\right] \quad (1)$$

$$y_3 = \left[\frac{y_2}{b}\right] \quad (2)$$

In the above formula, the symbol [ ] represents a rounding operation.

It should be noted that coordinate units of the second coordinate system may take any value (e.g., take one or more pixels on the touch display screen as coordinate units for horizontal and vertical axes).

Step 340: Processing of a touch event within another region

In another sub-step of step **320,** the first application **2213A** processes the touch event based on execution logic for the first view **V1,** which will not be detailed here.

Step 350: Transmission of the type and proportional coordinates of the touch event

After step **330** is performed, the method procedure shown in FIG. **3** proceeds to step **350.** In this step, the first application **2213A** sends, to the second application **2213B,** the type (e.g., each event type defined in **MotionEvent)** and the proportional coordinates **P3** $(x_3, y_3)$ of the touch event that are determined in step **330.**

In some embodiments, the first application **2213A** may send the type and the proportional coordinates of the touch event to the second application **2213B** by means of an interprocess communication mechanism.

In step 360, Response to the touch event within the second view

After step **330** is performed, the method procedure shown in FIG. **3** proceeds to step **350.** In this step, the second application **2213B** generates, based on the type and the proportional coordinates **P3** $(x_3, y_3)$ of the touch event that are sent by the first application **2213A,** an operation instruction to respond to the touch event.

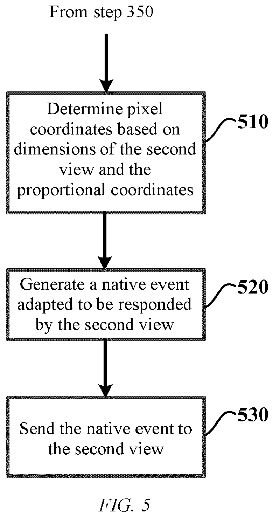

FIG. **5** is a flowchart of a method for generating an operation instruction according to some other embodiments of the disclosure, where the first view **V1** and the second view **V2** are still respectively used as the **Unity** view and the Android view in the method described. Referring to FIG. **5,** the method shown includes the following steps performed by the second application **2213B.**

In step **510,** physical coordinates or pixel coordinates **P4** $(x_4, y_4)$ of a touch event on a touch display screen are determined based on plane dimensions of the second view **V2** and proportional coordinates **P3** $(x_3, y_3)$ . Exemplarily, assuming that the second view spans **M** and **N** pixels respectively in length and width directions, the pixel coordinates **P4** $(x_4, y_4)$ may be determined according to the following formula:

$$x_4 = x_3 \times M \quad (3)$$

$$y_4 = y_3 \times N \quad (4)$$

In step **520,** after step **510** is performed, the method procedure shown in FIG. **5** proceeds to step **520.** In this step, the second application **2213B** generates, based on the type of the touch event that is sent by the first application **2213A** and the pixel coordinates that are determined in step **510,** a native event adapted to be responded to by the second view **V2.** Exemplarily, the second application **2213B** may encapsulate the type of the touch event and the pixel coordinates determined in step **510** into a **MotionEvent** Android native event.

In step **530,** after step **520** is performed, the method procedure shown in FIG. **5** proceeds to step **530.** In this step, the second application **2213B** sends the native event to the second view **V2,** enabling an accurate response to be made to the touch event. Those skilled in the art can understand that various illustrative logical blocks, modules, circuits, and algorithm steps described in this specification may be implemented as electronic hardware, computer software, or a combination thereof.

To demonstrate interchangeability between the hardware and the software, various illustrative parts, blocks, modules, circuits, and steps above have been described comprehensively based on their functionalities. Whether to implement such functionalities in a form of hardware or software depends on specific application and design constrains imposed on an overall system. Those skilled in the art may implement the described functionalities for specific and particular application based on manners of change. However, determination of such an implementation should not be understood as a departure from the scope of the disclosure.

Although only some specific embodiments of the disclosure are described, those of ordinary skill in the art should understand that the disclosure may be implemented in many other forms without departing from the essence and scope of the disclosure. Therefore, the presented examples and implementations are deemed as illustrative rather than restrictive, and without departing from the spirit and scope of the disclosure defined by the appended claims, the disclosure may cover various modifications and substitutions.

The embodiments and examples proposed herein are provided to describe as adequately as possible embodiments according to the technology and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

**Claims**

1. A method for implementing touch interaction, the method comprising:

   presenting a first view and a second view on a touch display screen by a first application and a second application, respectively, wherein the second view is an embedded view of the first view;
   in response to a touch event occurring within a region in the first view that corresponds to the second view, determining, by the first application, the type of the touch event and proportional coordinates of the touch event within the second view;
   sending, by the first application, the type and the proportional coordinates to the second application; and
   generating, by the second application and based on the type and the proportional coordinates, an operation instruction to respond to the touch event.

2. The method according to claim **1,** wherein the first view and the second view are respectively a **Unity** view and an Android view.

3. The method according to claim 1 or **2,** wherein the type of the touch event comprises an action-down event, an action-move event, and an action-up event.

4. The method according to any one of claims 1 to 3, wherein the second view is embedded into the first view by:
   creating, within the first view, a view control for displaying the second view, wherein the creation comprises setting a start position and plane dimensions of the view control within the first view.

5. The method according to claim **4,** wherein the first application determines the proportional relationship by:

   determining first coordinates of the touch event within a first coordinate system corresponding to the first view;
   transforming the first coordinates into second coordinates within a second coordinate system corresponding to the view control; and
   determining the proportional coordinates based on the second coordinates and the plane dimensions of the view control.

6. The method according to any one of claims **1 to 5,** wherein the first application sends the type and the proportional coordinates to the second application by means of an interprocess communication mechanism.

7. The method according to claim **5,** wherein the second application generates the operation instruction by:

    determining pixel coordinates of the touch event on the touch display screen based on the plane dimensions of the second view and the proportional coordinates;
    generating, based on the type and the pixel coordinates, a native event adapted to be responded to by the second view; and
    sending the native event to the second view.

8. A touch interaction device, comprising:

    a touch display screen; and
    a control unit, comprising:

        a memory having a first application and a second application stored thereon; and
        at least one processor,

    wherein the first application and the second application are run on the at least one processor to:

        present a first view and a second view on the touch display screen by the first application and the second application, respectively, wherein the second view is an embedded view of the first view;
        in response to a touch event occurring within a region in the first view that corresponds to the second view, determine, by the first application, the type of the touch event and proportional coordinates of the touch event within the second view;
        send, by the first application, the type and the proportional coordinates to the second application; and
        generate, by the second application and based on the type and the proportional coordinates, an operation instruction to respond to the touch event.

9. The touch interaction device according to claim **8,** wherein the first view and the second view are respectively a **Unity** view and an Android view.

10. The touch interaction device according to claim 8 or **9,** wherein the type of the touch event comprises an action-down event, an action-move event, and an action-up event.

11. The touch interaction device according to any one of claims 8 to 10, wherein the second view is embedded into the first view by:
    creating, within the first view, a view control for displaying the second view, wherein the creation comprises setting a start position and plane dimensions of the view control within the first view.

12. The touch interaction device according to claim **11,** wherein the first application determines the proportional coordinates by:

    determining first coordinates of the touch event within a first coordinate system corresponding to the first view;
    transforming the first coordinates into second coordinates within a second coordinate system corresponding to the view control; and
    determining the proportional coordinates based on the second coordinates and the plane dimensions of the view control.

13. The touch interaction device according to any one of claims **8 to 12,** wherein the first application sends the type and the proportional coordinates to the second application by means of an interprocess communication mechanism.

14. The touch interaction device according to claim **12 or 13,** wherein the second application generates the operation instruction by:

    determining pixel coordinates of the touch event on the touch display screen based on the plane dimensions of the second view and the proportional coordinates;
    generating, based on the type and the pixel coordinates, a native event adapted to be responded to by the second view; and
sending the native event to the second view.

15. The touch interaction device according to any one of claims **8 to 14,** wherein the touch interaction device is a vehicle central console screen or a smart home central console screen.

FIG. 1

FIG. 2

Present a first view
and a second view    310

Detect a touch event    320

There is no
touch event

There is a touch event
within another region

There is a touch event
within a corresponding
region

Process the touch
event within the
other region    340

Determine a type and
proportional coordinates of
the touch event    330

Send the type and the
proportional coordinates of
the touch event    350

Respond to the touch event
within the second view    360

FIG. 3

From step 320

Determine first
coordinates of the
touch event — 410

Transform the first
coordinates into
second coordinates — 420

Determine
proportional
coordinates — 430

To step 340

*FIG. 4*

From step 350

Determine pixel coordinates based on dimensions of the second view and the proportional coordinates ⌐510

Generate a native event adapted to be responded by the second view ⌐520

Send the native event to the second view ⌐530

*FIG. 5*

Europäisches
Patentamt

European
Patent Office

Office européen
des brevets

# EUROPEAN SEARCH REPORT

**Application Number**

EP 23 21 8870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 327 137 A (NINGBO AVERAGED INTELLIGENCE BANK SCIENCE AND TECH CO LTD) 12 April 2022 (2022-04-12) * abstract * * paragraph [0003] * * paragraph [0006] – paragraph [0009] * * paragraph [0026] – paragraph [0027] * * paragraph [0039] * * paragraph [0049] – paragraph [0059]; figures 1-4 * * paragraph [0067] – paragraph [0068] * | 1-15 | INV. G06F3/04883 G06F3/0484 G06F9/451 |
| A | CN 109 144 396 A (GUANGZHOU SHIYUAN ELECT TECH; GUANGZHOU SHIRUI ELEC TECH CO) 4 January 2019 (2019-01-04) * abstract * * paragraph [0072]; figure 1 * | 1-15 | |
| A | WO 2022/135186 A1 (HUAWEI TECH CO LTD [CN]) 30 June 2022 (2022-06-30) * the whole document * & EP 4 242 824 A1 (HUAWEI TECH CO LTD [CN]) 13 September 2023 (2023-09-13) * abstract * * paragraph [0119] – paragraph [0124]; figure 7 * | 1-15 | |
| A | Anonymous: "Coordinate System ¦ Qt GUI 6.4.2", , 4 February 2023 (2023-02-04), pages 1-9, XP093160537, Retrieved from the Internet: URL:https://web.archive.org/web/2023020422 2923/https://doc.qt.io/qt-6/coordsys.html [retrieved on 2024-05-08] * page 2 – page 2; figures 1, 2 * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 8 May 2024 | Reis Rodrigues, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                             

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 8870

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2024

| Patent document cited in search report | | Publication date | Patent family member(s) | | Publication date |
|---|---|---|---|---|---|
| CN 114327137 | A | 12-04-2022 | NONE | | |
| CN 109144396 | A | 04-01-2019 | NONE | | |
| WO 2022135186 | A1 | 30-06-2022 | CN | 114741039 A | 12-07-2022 |
| | | | CN | 117093165 A | 21-11-2023 |
| | | | EP | 4242824 A1 | 13-09-2023 |
| | | | JP | 2024500493 A | 09-01-2024 |
| | | | US | 2024045640 A1 | 08-02-2024 |
| | | | WO | 2022135186 A1 | 30-06-2022 |

EPO FORM P0459

For more details about this annex : see Official Journal of the European Patent Office, No. 12/82